# EUROPÄISCHE PATENTSCHRIFT

(11) **EP 1 020 395 B1**
(45) Veröffentlichungstag und Bekanntmachung des Hinweises auf die Patenterteilung: **22.03.2006**
(21) Anmeldenummer: 00250007.2
(22) Anmeldetag: 11.01.2000
(51) Int. Cl.: B66C 1/44

(54) **Klemmgreifer für von oben zu greifende Lasten**
Clamping gripper for gripping loads from above
Pince pour agripper des charges par dessus

(30) Priorität: 11.01.1999 DE 19901496
(43) Veröffentlichungstag der Anmeldung: 19.07.2000
(73) Patentinhaber: Demag Cranes & Components GmbH, 58300 Wetter (DE)
(72) Erfinder: Nerger, Klaus Klemens, 47506 Neukirchen-Vluyn (DE)
(74) Vertreter: Moser & Götze

(56) Entgegenhaltungen:
- DD-A- 248 103
- DE-A- 4 235 520
- DE-A- 19 525 018
- GB-A- 595 172
- US-A- 3 199 910
- US-A- 4 261 609
- US-A- 5 441 322

## Beschreibung

Die Erfindung betrifft einen Klemmgreifer für von oben zu greifende Lasten gemäß dem Oberbegriff des Anspruchs 1.

Aus der DE 195 25 018 C2 ist ein gattungsgemäßer Greifer bekannt, der für von oben zu greifende Lasten geeignet ist. Der an einem Handhabungsgerät angeordnete Greifer verfügt über eine Trageinheit, die mit dem Handhabungsgerät vertikal heb- und senkbar ist. Die Trageinheit ist mit Tragelementen versehen, die als Anschlußstücke für vorgesehene Greifelemente ausgebildet sind. Die Greifelemente sind im wesentlichen parallel zur Vertikalachsrichtung ausgerichtet und bewegen sich gegenläufig zueinander, so daß diese seitlich an eine Last anlegbar sind. Die Form der Greifelemente ist an die zu greifende Last derart angepaßt, daß die Last beim Greifen mittels Formschluß unterfaßt wird. Um ein Auseinanderdrücken der Greifelemente durch die Last während des Transports zu verhindern, ist der Greifer zusätzlich mit einer Vorrichtung versehen, mit deren Hilfe die Greifelemente relativ zueinander fixierbar sind.

Nachteilig bei diesem Greifer ist das erforderliche Untergreifen der Last, so daß dieser beispielsweise für Pappkartons und dgl. nicht oder nur schlecht geeignet ist.

Weiter ist aus der DE 42 35 520 A1 eine Klemmvorrichtung für von oben zu greifende Lasten bekannt, die beidseitig einer vertikalen Mittenebene gegenläufig zueinander bewegbare Tragelemente aufweist, an deren Enden jeweils ein Greifelement angeordnet ist, wobei die beiden Greifelemente einander zugewandt und seitlich an die Last anlegbar sind. Die Tragelemente sind an einer heb- und senkbaren Trageinheit vorgesehen und nach unten hin ausgerichtet. Bei dieser Klemmvorrichtung handelt es sich um einen klassischen Scherengreifer mit einer Schere, die von der Gewichtskraft der Last zugezogen wird. Hierzu sind die Enden in Langlöchern der Trageinheit geführt, deren Erstreckungsrichtungen schräg nach unten weisen.

Aus der US 3,199,910 und der US 4,261,609 sind Klemmgreifer für von oben zu greifende Lasten bekannt, die beidseitig einer vertikalen Mittenebene an einer heb- und senkbaren Trageinheit nach unten ausgerichtete, gegenläufig zueinander bewegbare Tragelemente aufweisen, an denen einander zugewandte seitlich an die Last anlegbare Greifelemente angeordnet sind. An den Tragelementen sind ferner bezogen auf die Mittenebene jeweils unter einem nach oben offenen Winkel verlaufende Längsführungen für die Greifelemente vorgesehen, so dass sich beim Anheben der Trageinheit mit den an der Last anliegenden Greifelementen durch die Verschiebung der Greifelemente in Lastrichtung relativ zu den Tragelementen selbsttätig ein Klemmhub mit einer vom Gewicht der Last abhängenden Klemmkraft einstellt.

Aus der DD 248 103 A1 ist eine Aufhängung für Zangen unter Eigenlastwirkung mit selbsttätiger Entriegelung und Zugrohren bekannt, bei dem die Klemmbacken über eine horizontal verlaufende Achse gelenkig an dem Tragarmen angeschlossen sind.

Der Nachteil einer solchen Klemmvorrichtung ist ihre relativ große Bauhöhe, bezogen auf das Gewicht und die Größe der zu klemmenden Last. Häufig wird dabei die große Bauhöhe mit einer relativ großen Breite in Greifrichtung kombiniert.

Die Aufgabe der Erfindung ist es, einen bei vergleichbaren Klemmkräften niedrigbauenden Klemmgreifer zu schaffen, der in Greifrichtung eine schmalbauende Ausführung ermöglicht.

Die Lösung dieser Aufgabe ist durch die im Anspruch 1 angegebenen Merkmale gegeben. Durch die kennzeichnenden Merkmale der Unteransprüche 2 bis 14 ist der Klemmgreifer in vorteilhafter Weise weiter ausgestaltet.

Die Lösung sieht vor, daß an den Tragelementen bezogen auf die Mittenebene jeweils unter einem nach oben offenen Winkel verlaufende Längsführungen für die Greifelemente angeordnet sind, daß am oberen Ende der Längsführungen jeweils eine Bereitschaftsstellung für die zugeordneten Greifelemente vorgesehen ist, in der diese kraftbeaufschlagt gehalten werden, und daß sich beim Anheben der Trageinheit mit den an der Last anliegenden Greifelementen durch die Verschiebung der Greifelemente in Lastrichtung relativ zu den Tragelementen selbsttätig ein Klemmhub mit einer vom Gewicht der Last abhängigen Klemmkraft einstellt. Diese Lösung sorgt nach einem kraftbeaufschlagten Anlegen der Greifelemente an die Last für einen von der Gewichtskraft der Last abhängigen Klemmhub. Die Kraftbeaufschlagung ist dabei nur so groß, wie dies für ein störungsfreies Greifen erforderlich ist. Die Schere dient - im Unterschied zum klassischen Scherengreifer - eben nur zur Anpassung (d. h. dem drucklosen Anlegen) der Greifelemente an die Last, wobei die Scheren in dieser Stellung vorzugsweise arretiert werden können. Das eigentliche Klemmen erfolgt mittels der Greifelemente derart, daß diese jeweils in einer Längsführung nach unten gezogen werden, die unter einem nach oben offenen Winkel verlaufen. Hierzu werden die Greifelemente vorher in ihre Bereitschaftsstellung am oberen Ende der Längsführungen gebracht. Für eine gleichmäßige Anlage sorgt bei der Lösung die Verschwenkbarkeit der Greifelemente um eine senkrecht zu den Längsführungen und parallel zur Mittenebene verlaufende horizontale Schwenkachse. Um Störungen bei Betrieb des Greifers zu vermeiden, ist femer vorgesehen, daß die beiden Greifelemente in ihrer Bereitschaftsstellung einen nach oben offenen Spreitzwinkel einschließen und kraftbeaufschlagt in dieser Stellung gehalten werden.

Die Handhabung des Klemmgreifers gestaltet sich sehr einfach, wenn der Abstand der Tragelemente in ihre Bewegungsrichtung gesehen mittels einer Fixierung feststellbar ist.

Eine einfache Bedienung wird erzielt, wenn sich die Greifelemente nach Lösen der Fixierung an eine sich zwischen diesen befindliche Last kraftbeaufschlagt anlegen. Dies kann selbsttätig erfolgen, z.B. unter Ausnutzung der vorhandenen Eigengewichtskräfte.

Eine sehr gleichmäßige Klemmung läßt sich insbesondere bei einander paarweise gegenüberliegenden Längsführungen erzielen.

Eine konstruktiv einfache Ausführungsform des Greifers erhält man, wenn genau zwei unter einem nach oben offenen Spreitzwinkel zueinander verlaufende Längsführungen mit jeweils einem Greifelement versehen sind, deren plattenförmige Greifflächen einander zugewandt sind.

Zweckmäßigerweise sind die Greifflächen ohne seitlichen Versatz zueinander angeordnet.

Eine einfache Ausführung sieht vor, daß die Längsführung als Langloch ausgebildet ist, in das die Schwenkachse des zugehörigen Greifelements eingreift.

Bei einer einfachen Ausführung sind die Greifelemente durch Federkraft in ihrer Bereitschaftsstellung gehalten.

Das Halten der Greifelemente in der Bereitschaftsstellung erfolgt mit Vorteil durch Rastelemente, die erst ab einer vorgegebenen Kraft ein Verschwenken der Greifelemente zulassen.

Ein einwandfreies Greifen der Last läßt sich erzielen, wenn die Greifelemente vor dem Anheben mit einer von dem Gewicht der Trageinheit abhängigen Kraft selbsttätig flächig an die Seitenwände der Last anlegbar sind. Es wird also die Anlage und die vom Gewicht der Last abhängige Klemmung zeitlich voneinander getrennt.

Zum Anlegen sind die Tragelemente im einfachsten Falle an linearen Ein- und Ausfahrelementen als Horizontalträger befestigt, die in einer Horizontalführung der Trageinheit gegenläufig zueinander geführt sind.

Eine stabile und konstruktiv einfache Ausführung der Trageinheit einschließlich der Horizontalführung erhält man, wenn diese aus zwei Winkelelementen gebildet ist, deren horizontale Schenkel den Horizontalträger und deren vertikale Schenkel das Tragelement bilden.

Das Aufnehmen und Ablegen der Last sowie das Bewegen der Greifelemente in Ihrer Bereitschaftsstellung läßt sich mit geringem Aufwand verwirklichen, wenn zum Auflegen der Trageinheit auf die Last an den Greifelementen horizontale Auflagelaschen angeordnet sind.

Eine einwandfreie Funktionsweise ist sichergestellt, wenn jedes Greifelement vor dem selbsttätigen kraftbeaufschlagten Anlegen an die Last in der Bereitschaftsstellung am oberen Ende der zugeordneten Längsführung gehalten ist.

Ein Ausführungsbeispiel der Erfindung ist in der Zeichnung dargestellt und wird nachfolgend näher beschrieben. Es zeigen:
- Fig. 1: eine Vorderansicht des Klemmgreifers,
- Fig. 1a: eine vergrößerte Vorderansicht gemäß Fig. 1 und
- Fig. 2: ein senkrechtes Tragelement mit Greifelement gemäß Fig. 1 in Bereitschaftsstellung.

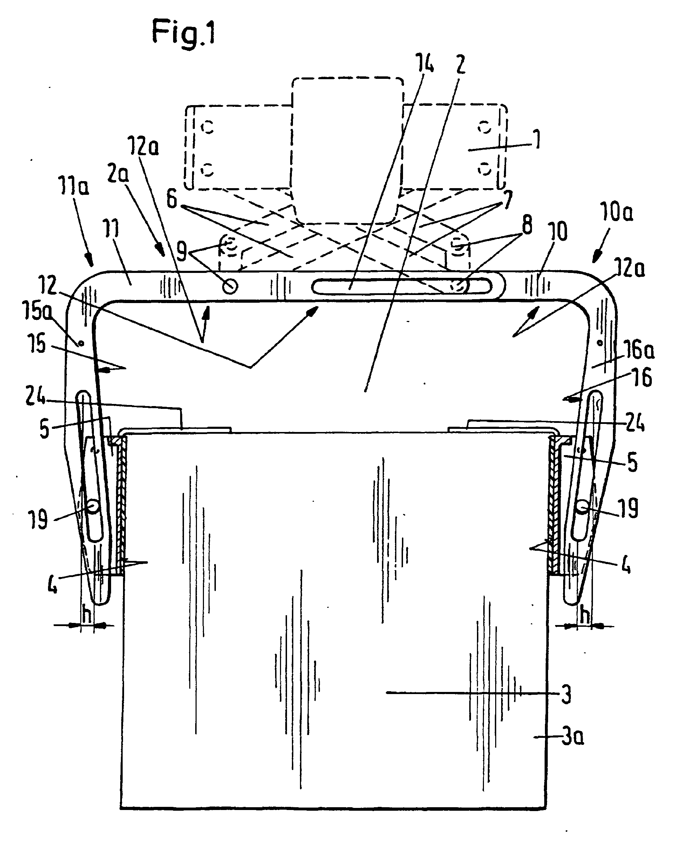

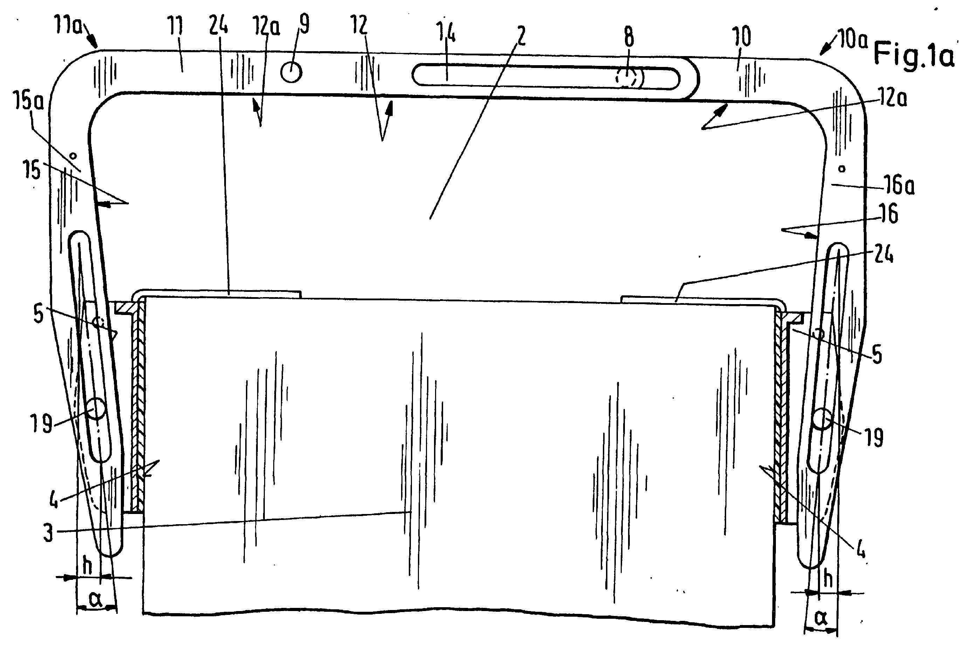

Fig. 1 zeigt ein Handhabungsgerät 1 mit einer vertikal heb- und senkbaren Trageinheit 2a mit einem Greifer 2 während des Anhebens einer Last 3 (z.B. Pappkarton 3a). Dabei liegen die als ebene Reibflächen ausgebildeten Greifflächen 4 der backenförmigen Greifelemente 5 beidseitig an der Last 3 an.

Wie Fig. 1 und 1a erkennen lassen, ist die Trageinheit 2a am Handhabungsgerät 1 über Hebelpaare bildende Stäbe 6, 7 befestigt, die mit ihren Enden jeweils an übereinander angeordneten Gelenkbolzen 8, 9 angelenkt sind und jeweils ein Gelenkparallelogramm bilden. Die unteren Gelenkbolzen 8 und 9 sind dabei jeweils gelenkig mit einem horizontalen Schenkel 10 bzw. 11 eines Winkelelements 10a bzw. 11a der Trageinheit 2a verbunden. Die beiden parallel zueinander längsverschieblich geführten Schenkel 10, 11 bilden die gegenläufig zueinander ein- und ausfahrbaren Elemente 12a einer Horizontalführung 12.

Fig. 1 läßt erkennen, daß zum Ein- und Ausfahren der Schenkel 10, 11 einer der beiden Gelenkbolzen 8 und 9 jeweils in einem zugeordneten Langloch 14 des Schenkels 10 bzw. 11 geführt ist, wobei die Ansicht in Fig. 1 allerdings nur das Langloch 14 des Schenkels 11 zeigt. Die beiden Bolzen 8, 9 sind mit ihrem dem Langloch 14 abgewandten Ende jeweils drehbeweglich mit dem anderen Schenkel verbunden, d.h. der in das Langloch 14 eingreifende Bolzen 8 mit dem Schenkel 10.

Auf diese Weise wird erreicht, daß sich die Schenkel 10, 11 beim Anheben des Handhabungsgeräts 1 aber noch vor dem Anheben der Trageinheit 2a und des Greifers 2 aufgrund ihres Eigengewichts (der Trageinheit 2a und des Greifers 2) selbsttätig zusammenschieben.

Die beiden zusammenschiebbaren Winkelelemente 10a, 11a weisen gemäß Fig. 1 neben den horizontalen Schenkeln 10, 11 zwei außenliegende vertikal nach unten gerichtete Schenkel 15a, 16a auf, welche die senkrechten Tragelemente 15, 16 der Trageinheit 2a bilden. An den Tragelementen 15, 16 sind die um eine horizontale Schwenkachse 19 verschwenkbaren Greifelemente 5 abgestützt. Die Greifelemente 5 sind im wesentlichen parallel zu einer vertikalen Achsrichtung ausgerichtet und über die Tragelemente 15, 16 gegenläufig zueinander bewegbar. Nach dem Zusammenschieben der beiden Tragelemente 15, 16 liegen die beiden Greifelemente 5 mit einer aus der Gewichtskraft der Trageinheit 2a und des Greifers 2 resultierenden Kraft seitlich an der Last 3 an.

Die Kraftbeaufschlagung der Greifelemente 5 vor dem Anheben der Last 3 ist von der Schrägstellung der Stäbe 6,7 sowie von der gewichtsmäßigen Auslegung der Trageinheit 2a plus Greifer 2 vorgegeben. Der Anpreßdruck ergibt sich bekanntermaßen aus der Anpreßkraft dividiert durch die Greiffläche 4 der Greifelemente 5.

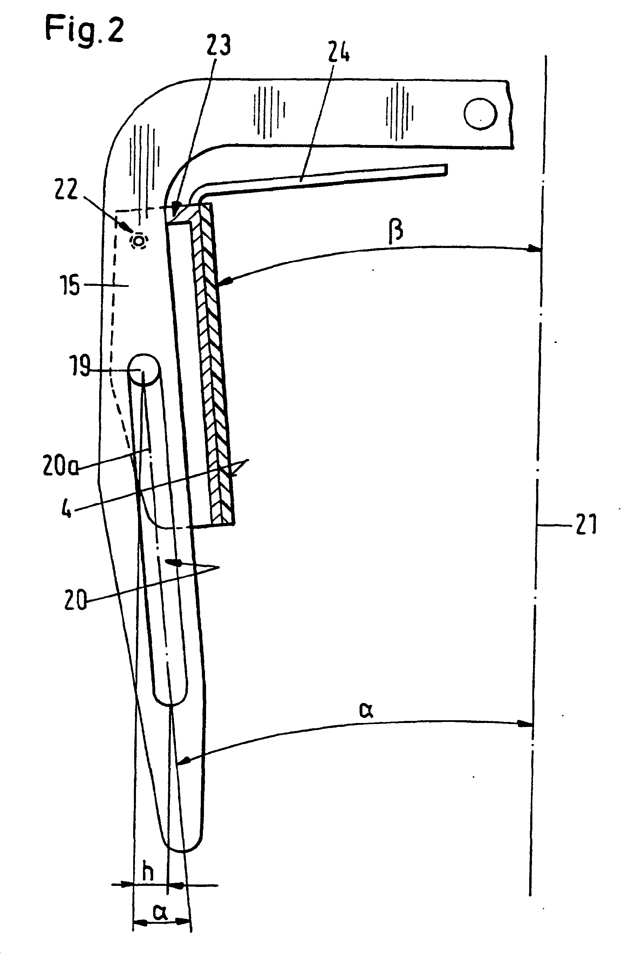

Fig. 2 zeigt eine vergrößerte Darstellung des Tragelements 15 mit dem zugehörigen Greifelement 5 in der Bereitschaftsstellung. Die längsverschiebliche Längsführung 20 des Greifelements 5 erfolgt gemäß Fig. 2 mittels eines Langlochs 20a, in das die senkrecht zu dessen Längsrichtung verlaufende Schwenkachse 19 eingreift. Das Langloch 20a und damit die Längsführung 20 verlaufen bezogen auf die Mittenebene 21 unter einem nach oben offenen Winkel α, also schräg nach oben, so daß die beiden Längsführungen 20 des bezüglich Fig. 1 rechten und linken Greifelements 5 zueinander einen nach oben offenen Winkel 2α symmetrisch zur Mittenebene einschließen. Beim Anheben sorgen dann die von der Last 3 nach unten gezogenen Greifelemente 5 aufgrund der schräg zueinander angeordneten Längsführungen 20 für einen entsprechenden Klemmhub. Beim Anheben der Last 3 bei Erreichen einer vorgegebenen Klemmkraft wird die Lage der Schenkel 10, 11 zueinander durch den nicht dargestellten Verriegelungsmechanismus selbsttätig fixiert.

Selbstverständlich ist es auch möglich, mehrere Längsführungen 20 sowie mehrere Greifelemente 5 nebeneinander anzuordnen. Dann sollten die Längsführungen 20 beidseitig der vertikalen Mittenebene 21 jeweils in einer gemeinsamen Ebene verlaufen, wobei sich die beiden Ebenen entsprechend dem oben Gesagten unter einem nach oben offenen Spreizwinkel 2α schneiden.

Im Ausführungsbeispiel sind genau zwei Längsführungen 20 als Paar einander sowie der Mittenebene 21 gegenüberliegend vorgesehen, wobei die Greifelemente 5 in Richtung Schwenkachse 19 gesehen zueinander einen kleinen seitlichen Versatz aufweisen. Eine versatzfreie Ausführung ist auch möglich.

Wie Fig. 1 zeigt, sind die plattenförmigen Greifflächen 4 einander zugewandt. Gemäß Fig. 2 schließen die beiden Greifflächen 4 in ihrer bezogen auf die zugeordnete Längsführung 20 oberen Bereitschaftsstellung, also vor dem Anlegen an die zu greifende Last 3, einen nach oben offenen Spreizwinkel β ein, jeweils bezogen auf die Mittenebene 21. Der Spreizwinkel β ist im Ausführungsbeispiel gleich dem Winkel α gewählt; er kann aber auch unterschiedlich zum Winkel α gewählt werden.

Die Greifelemente 5 werden mittels Rastelementen 22 in ihrer Bereitschaftsstellung gehalten. Die Rastelemente 22 sind im Ausführungsbeispiel aus einer federbelasteten Kugel und einer zur Kugelform komplementären Vertiefung (beide nicht dargestellt) gebildet. Beim Andrücken der Greifelemente 5 an die Last 3, also bei Überschreitung der Federkraft, werden die Kugeln in die Vertiefung hineingedrückt und das Greifelement 5 wird gegen die Seitenfläche der Last 3 geschwenkt.

Fig. 2 zeigt, daß das Greifelement 5 außerdem mit einer Anlagekante 23 versehen ist, die in der Bereitschaftsstellung am Tragelement 15 anliegt.

Das Aufsetzen der Trageinheit 2a mit dem Greifer 2 auf die Last erfolgt über horizontale Auflagelaschen 24, die jeweils am oberen Ende des Greifelements 5 befestigt sind.

Die Funktion des Greifers 2 ist nachfolgend beschrieben:

Der zur Aufnahme der Last 3 ausreichend weit geöffnete Greifer 2 mit zueinander fixierten Schenkeln 10, 11 wird zu Beginn des Greifvorganges von oben auf die Last 3 abgesenkt. Die beiden senkrechten Tragelemente 15, 16 sind hierzu so weit auseinandergeschoben, daß der lichte Abstand zwischen den Greifflächen 4 größer als die Kantenlänge der Last 3 ist. Die Greifelemente 5 befinden sich in ihrer Bereitschaftsstellung, in der sie zueinander unter einem nach oben offenen Winkel 2α angeordnet sind. In der Bereitschaftsstellung ist der Abstand der Unterkanten der plattenförmigen Greifflächen 4 - wie in Fig. 2 dargestellt - kleiner als der der Oberkanten. Nach Lösung der Fixierung der beiden Schenkel 10, 11 bei über die Laschen 24 auf der Last 3 aufliegendem Greifer 2 bewegen sich die Tragelemente 15, 16 selbsttätig aufeinander zu, bis die Greifflächen 4 an den Seitenflächen der Last 3 zur Anlage kommen. Während des Anlegens werden die Greifelemente 5 aus ihrer Bereitschaftsstellung in eine Lage geschwenkt, die der Ausrichtung der Seitenflächen der Last 3 entspricht. In Fig. 1 verlaufen die Greifflächen 4 nach Anlage an die Last 3 parallel zueinander. Aufgrund der Reibungskraft zwischen den Greifflächen 4 und den Seitenflächen der Last 3 werden die Greifelemente 5 beim Anheben des Greifers 2 entlang ihrer Längsführung 20 nach unten verschoben. Da die Längsführungen 20 bezogen auf die Mittenebene 21 jeweils unter dem Winkel α geneigt sind, führen die Greifelemente 5 proportional zu ihrer Verschiebung einen Klemmhub aus. Bei Erreichen einer vorgegebenen Klemmkraft wird die Lage der Schenkel 10, 11 zueinander durch den nicht dargestellten Verriegelungsmechanismus selbsttätig fixiert. Die Last 3 wird dann weiter ohne Zwischenstop angehoben und kann an der gewünschten Stelle wieder abgesetzt werden.

Sicherheitshalber muß die Nachgiebigkeit der Last 3, also z. B. des zu greifenden Pappkartons, immer kleiner als der größtmögliche Klemmhub sein. Insbesondere muß sichergestellt sein, daß die Schwenkachsen 19 nicht an den unteren Enden der Längsführungen 20a zur Auflage kommen, da sonst keine weitere gewichtsproportionale Erhöhung der Klemmkraft mehr erfolgt.

Die Wirkungsweise des Klemmgreifers besteht bezüglich des Funktionsprinzips darin, daß die Gewichtskraft der Last 3 auf die Klemmbacken 5 wirkt, so daß diese mit einem Vielfachen der Gewichtskraft gegen die Seitenflächen der Last 3 gedrückt werden.

Beim Absetzen und nach (beispielsweise manuellem) Lösen des Verriegelungsmechanismus werden die Greifelemente 5 durch das Eigengewicht der Trageinheit 2a mit dem Greifer 2 über die Laschen 24 nach oben gedrückt. Der Druck auf die Unterseiten der Laschen 24 sorgt für ein Schwenken der Greifelemente 5 nach außen, bis diese mit der Anlagekante 23 an der Innenseite der Tragelemente 15, 16 anliegen. Die beiden Anlagekanten 23 gleiten dann an den Innenseiten der Tragelemente 15, 16 schräg nach oben, und zwar bis die Schwenkachsen 19 am oberen Ende der Längsführungen 20 anliegen. Dabei rasten die Kugeln in die entsprechende Vertiefungen ein. Anschließend wird die Lage der Tragelemente 15, 16 wieder fixiert.

Die Fixierung der Tragelemente 15, 16 bzw. der Greifer 2 ist in jeder gewünschten Zwischenstellung möglich. Folglich können Lasten 3 auch in relativ engen Verpackungen und dergleichen abgelegt werden, ohne daß der Greifer 2 nach dem Aufsetzen der Last 3 vollständig geöffnet wird. In diesen Fällen bestimmt der Freiraum zwischen der Last 3 und der Verpackung den Öffnungshub des Greifers 2.

Bei stark wechselnden Lastgrößen wird der Greifer 2 jeweils auf der Kopffläche einer größeren Last 3 aufgesetzt. Das untere Ende der Greifelemente 5 ist hierzu abgerundet oder mit einer frei drehbaren Kugel versehen, so daß die Tragelemente 15, 16 sich nach außen bewegend über die Kopffläche gleiten können, um selbsttätig "Maß zu nehmen". Oder aber der Greifer 2 wird vorher jeweils auf dem Boden oder zum Maßnehmen auf einer gleich großen Last 3 aufgesetzt.

### Bezugszeichenliste:

- 1: Handhabungsgerät
- 2: Greifer
- 2a: Trageinheit
- 3: Last
- 3a: Pappkarton
- 4: Reibfläche
- 5: Greifelement
- 6: Stab
- 7: Stab
- 8: Gelenkbolzen
- 9: Gelenkbolzen
- 10: Schenkel
- 10a: Winkelelement
- 11: Schenkel
- 11 a: Winkelelement
- 12: Horizontalführung
- 12a: ausfahrbares Element
- 14: Langloch
- 15: Tragelement
- 15a: Schenkel
- 16: Tragelement
- 16a: Schenkel
- 19: Schwenkachse
- 20: Längsführung
- 20a: Langloch
- 21: Mittenebene
- 22: Rastelement
- 23: Anlagekante
- 24: Laschen

## Patentansprüche

1. Klemmgreifer für von oben zu greifende Lasten,
mit beidseitig einer vertikalen Mittenebene an einer heb- und senkbaren Trageinheit nach unten ausgerichteten, gegenläufig zueinander bewegbaren Tragelementen, an denen einander zugewandte seitlich an die Last anlegbare Greifelemente angeordnet sind,
wobei an den Tragelementen (15, 16) bezogen auf die Mittenebene (21) jeweils unter einem nach oben offenen Winkel α verlaufende Längsführungen (20) für die Greifelemente (5) angeordnet sind,
wobei am oberen Ende der Längsführungen (20) jeweils eine Bereitschaftsstellung für die zugeordneten Greifelemente (5) vorgesehen ist, in der diese kraftbeaufschlagt gehalten werden, und
wobei sich beim Anheben der Trageinheit mit den an der Last (3) anliegenden Greifelementen (5) durch die Verschiebung der Greifelemente (5) in Lastrichtung relativ zu den Tragelementen (15, 16) selbsttätig ein Klemmhub mit einer vom Gewicht der Last (3) abhängigen Klemmkraft einstellt,
**dadurch gekennzeichnet,**
**daß** die Greifelemente (5) jeweils um eine horizontale senkrecht zu den Längsführungen (20) und parallel zur Mittenebene (21) verlaufende Schwenkachse (19) verschwenkbar sind und daß die beiden Greifelemente (5) in ihrer Bereitschaftsstellung einen nach oben offenen Spreizwinkel 2β einschließen und kraftbeaufschlagt in dieser Stellung gehalten werden.

2. Klemmgreifer nach Anspruch 1,
**dadurch gekennzeichnet,**
**daß** der Abstand der Tragelemente in ihre Bewegungsrichtung gesehen mittels einer Fixierung feststellbar ist.

3. Klemmgreifer nach einem der Ansprüche 1 oder 2,
**dadurch gekennzeichnet,**
**daß** die Greifelemente (5) nach Lösen der Fixierung an eine sich zwischen diesen befindliche Last (3) kraftbeaufschlagt anlegbar sind

4. Klemmgreifer nach einem der Ansprüche 1 bis 3,
**dadurch gekennzeichnet,**
**daß** die Greifelemente (5) einander paarweise gegenüberliegen.

5. Klemmgreifer nach einem der Ansprüche 1 bis 4,
**dadurch gekennzeichnet,**
**daß** genau zwei unter einem nach oben offenen Spreizwinkel 2α zueinander verlaufende Längsführungen (20) mit jeweils einem Greifelement (5) vorgesehen sind, deren plattenförmige Greifflächen (4) einander zugewandt sind.

6. Klemmgreifer nach Anspruch 5,
**dadurch gekennzeichnet,**
**daß** die Greifflächen (4) ohne seitlichen Versatz zueinander angeordnet sind.

7. Klemmgreifer nach einem der Ansprüche 1 bis 6,
**dadurch gekennzeichnet,**
**daß** die Längsführung (20) als Langloch (21) ausgebildet ist, in das die Schwenkachse (19) des zugehörigen Greifelements (5) eingreift.

8. Klemmgreifer nach einem der Ansprüche 1 bis 7,
**dadurch gekennzeichnet,**
**daß** die Greifelemente (5) durch Federkraft in ihrer Bereitschaftsstellung gehalten werden.

9. Klemmgreifer nach einem der Ansprüche 1 bis 8,
**dadurch gekennzeichnet,**
**daß** jedes Greifelement (5) Rastelemente (22) aufweist, die es in seiner Bereitschaftsstellung halten.

10. Klemmgreifer nach einem der Ansprüche 1 bis 9,
**dadurch gekennzeichnet,**
**daß** die Greifelemente (5) vor dem Anheben der Last (3) mit einer von dem Gewicht der Trageinheit (2a) abhängigen Kraft selbsttätig flächig an die Seitenwände der Last (3) anlegbar sind.

11. Klemmgreifer nach einem der Ansprüche 1 bis 10,
**dadurch gekennzeichnet,**
**daß** die Tragelemente (15, 16) an lineareri Ein- und Ausfahrelementen (12a) als Horizontalträger befestigt sind, die in einer Horizontalführung (12) der Trageinheit (2a) gegenläufig zueinander geführt sind.

12. Klemmgreifer nach Anspruch 11,
**dadurch gekennzeichnet,**
**daß** die Trageinheit (2a) aus zwei Winkelelementen (10a, 11a) gebildet ist, deren horizontale Schenkel (10, 11) den Horizontalträger und deren vertikale Schenkel (15a, 16a) das Tragelement (15, 16) bilden.

13. Klemmgreifer nach einem der Ansprüche 1 bis 12,
**dadurch gekennzeichnet,**
**daß** an den Greifelementen (5) horizontale Auflagelaschen (24) zum Auflegen der Trageinheit (2a) auf die Last (3) angeordnet sind.

14. Klemmgreifer nach einem der Ansprüche 1 bis 13,
**dadurch gekennzeichnet,**
**daß** jedes Greifelement (5) vor dem selbsttätigen kraftbeaufschlagten Anlegen an die Last (3) in der Bereitschaftsstellung am oberen Ende der zugeordneten Längsführung (20) gehalten ist.

## Claims

1. Clamping gripper for loads to be gripped from above, with carrier elements which are movable relative to one another and are directed downwards on both sides of a vertical central plane on a carrier unit which can be raised and lowered, gripper elements which face one another being disposed on these carrier elements so as to be applied laterally to the load, wherein longitudinal guides (20) for the gripper elements (5) are disposed on the carrier elements (15, 16) so as to extend in each case at an upwardly open angle α relative to the central plane (21), wherein a ready position for the associated gripper elements (5) is provided in which the gripper elements are held under the action of force at the upper end of each of the longitudinal guides, and wherein when the carrier unit is raised with the gripper elements (5) applied to the load (3) a clamping action is automatically established with a clamping force which is dependent upon the weight of the load (3) by the displacement of the gripper elements (5) in the load direction relative to the carrier elements (15, 16), **characterised in that** the gripper elements (5) are each pivotable about a horizontal pivot axis (19) extending perpendicular to the longitudinal guides (20) and parallel to the central plane (21), and that the two gripper elements (5) in their ready position enclose an upwardly open spread angle 2*β* and are held in this position under the action of force.

2. Clamping gripper as claimed in Claim 1, **characterised in that** the spacing between the carrier elements in the direction of movement thereof can be defined by fixing means.

3. Clamping gripper as claimed in any one of Claims 1 or 2, **characterised in that** after release of the fixing means the gripper elements (5) can be applied under the action of force to a load located between them.

4. Clamping gripper as claimed in any one of Claims 1 to 3, **characterised in that** the gripper elements (5) lie opposite one another in pairs.

5. Clamping gripper as claimed in any one of Claims 1 to 4, **characterised in that** precisely two longitudinal guides (20) which extend at an upwardly open spread angle 2α with respect to one another are each provided with a gripper element (5), wherein the plate-shaped gripping surfaces of the gripper elements face one another.

6. Clamping gripper as claimed in Claim 5, **characterised in that** the gripping surfaces (4) are disposed without lateral offset relative to one another.

7. Clamping gripper as claimed in any one of Claims 1 to 6, **characterised in that** the longitudinal guide (20) is constructed as a slot (21) in which the pivot pin (19) of the associated gripper element (5) engages.

8. Clamping gripper as claimed in any one of Claims 1 to 7, **characterised in that** the gripper elements (5) are held by spring force in their ready position.

9. Clamping gripper as claimed in any one of Claims 1 to 8, **characterised in that** each gripper element (5) has latching elements (22) which hold it in its ready position.

10. Clamping gripper as claimed in any one of Claims 1 to 9, **characterised in that** before the load (3) is raised the gripper elements (5) can be automatically applied flat against the side walls of the load (3) with a force which is dependent upon the weight of the carrier unit (2a).

11. Clamping gripper as claimed in any one of Claims 1 to 10, **characterised in that** the carrier elements (15, 16) are fixed on linear elements (12a) which can move in and out as horizontal supports and are guided in opposite directions to one another in a horizontal guide (12) of the carrier unit (2a).

12. Clamping gripper as claimed in Claim 11, **characterised in that** the carrier unit (2a) is formed by two angle elements (10a, 11a) of which the horizontal arm (10, 11) forms the horizontal support and the vertical arm (15a, 16a) forms the carrier element (15, 16).

13. Clamping gripper as claimed in any one of Claims 1 to 12, **characterised in that** horizontal supporting brackets (24) are disposed on the gripper elements (5) for placing the carrier unit (2a) on the load.

14. Clamping gripper as claimed in any one of Claims 1 to 13, **characterised in that** each gripper element (5) is held in the ready position at the upper end of the associated longitudinal guide (20) before it is automatically applied to the load (3) under the action of force.

## Revendications

1. Pince de préhension destinée à des charges à prendre par le haut, laquelle pince comporte des éléments porteurs qui sont orientés vers le bas des deux côtés d'un plan médian vertical au niveau d'une unité porteuse relevable et abaissable, qui sont mobiles l'un par rapport à l'autre dans des sens opposés et sur lesquels sont disposés des éléments de préhension dirigés l'un vers l'autre et appuyant latéralement contre la charge, et
dans laquelle des guides longitudinaux (20), destinés aux éléments de préhension (5), sont disposés sur les éléments porteurs (15, 16) et s'étendent angulairement par rapport au plan médian (21) avec un angle α ouvert vers le haut,
dans laquelle il est prévu à l'extrémité supérieure de chacun des guides longitudinaux (20) une position d'attente des éléments de préhension associés (5) dans laquelle ces éléments de préhension sont maintenus sous l'action d'une force, et
dans laquelle, lorsque l'on soulève l'unité porteuse avec les éléments de préhension (5) portant contre la charge (3), une course de serrage avec une force de serrage fonction du poids de la charge (3) est réglée automatiquement en déplaçant les éléments de préhension (5) en direction de la charge par rapport aux éléments porteurs (15, 16),
**caractérisée en ce que**
les éléments de préhension (5) sont aptes à pivoter autour d'un axe de pivotement horizontal (19) s'étendant perpendiculairement aux guides longitudinaux (20) et parallèlement au plan médian (21) et **en ce que** les deux éléments de préhension (5) forment dans leur position d'attente un angle aigu 2β ouvert vers le haut et sont maintenus dans cette position sous l'action d'une force.

2. Pince de préhension selon la revendication 1, **caractérisée en ce que** la distance entre les éléments porteurs dans leur position d'attente peut être fixée au moyen d'un élément de fixation.

3. Pince de préhension selon l'une des revendications 1 ou 2, **caractérisée en ce que**, après avoir retiré l'élément de fixation, les éléments de préhension (5) peuvent porter contre une charge se trouvant entre eux en exerçant une force.

4. Pince de préhension selon l'une des revendications 1 à 3, **caractérisée en ce que** les éléments de préhension (5) sont opposés par paire l'un à l'autre.

5. Pince de préhension selon l'une des revendications 1 à 4, **caractérisée en ce qu'**il est prévu exactement deux guides longitudinaux (20) qui s'étendent angulairement l'un par rapport à l'autre avec un angle aigu 2α ouvert vers le haut, qui comportent chacun un élément de préhension (5) et dont les faces de préhension (4) en forme de plaque sont dirigées l'une vers l'autre.

6. Pince de préhension selon la revendication 5, **caractérisée en ce que** les faces de préhension (4) sont disposées l'une par rapport à l'autre sans décalage latéral.

7. Pince de préhension selon l'une des revendications 1 à 6, **caractérisée en ce que** le guide longitudinal (20) est conformé en trou oblong (21) dans lequel s'engage l'axe de pivotement (19) de l'élément de préhension associé (5).

8. Pince de préhension selon l'une des revendications 1 à 7, **caractérisée en ce que** les éléments de préhension (5) sont maintenus dans leur position d'attente par une force élastique.

9. Pince de préhension selon l'une des revendications 1 à 8, **caractérisée en ce que** chaque élément de préhension (5) comporte des éléments d'arrêt (22) qui le maintiennent dans sa position d'attente.

10. Pince de préhension selon l'une des revendications 1 à 9, **caractérisée en ce que**, avant de soulever la charge (3), les éléments de préhension (5) peuvent porter automatiquement à plat contre les parois latérales de la charge (3) avec une force qui dépend du poids de l'unité porteuse (2a).

11. Pince de préhension selon l'une des revendications 1 à 10, **caractérisée en ce que** les éléments porteurs (15, 16) sont fixés à des éléments linéaires (12a), aptes à se déployer et s'escamoter, qui servent de support horizontal et qui sont guidés l'un par rapport à l'autre, dans des sens opposés, dans un guide horizontal (12) de l'unité porteuse (2a).

12. Pince de préhension selon la revendication 11, **caractérisée en ce que** l'unité porteuse (2a) est formée de deux éléments angulaires (10a, 11a) dont les branches horizontales (10, 11) forment le support horizontal et dont les branches verticales (15a, 16a) forment l'élément porteur (15, 16).

13. Pince de préhension selon l'une des revendications 1 à 12, **caractérisée en ce que** des pattes d'appui (24) sont disposées sur les éléments de préhension (5) et permettent à l'unité porteuse (2a) d'appuyer sur la charge (3).

14. Pince de préhension selon l'une des revendications 1 à 13, **caractérisée en ce que** chaque élément de préhension (5) est maintenu dans la position d'attente à l'extrémité supérieure du guide longitudinal associé (20) avant de porter automatiquement contre la charge (3) sous l'action d'une force.
